# EUROPEAN PATENT SPECIFICATION

(11) **EP 0 651 519 B1**
(45) Date of publication and mention of the grant of the patent: **26.04.2000**
(21) Application number: 95101367.1
(22) Date of filing: 07.12.1990
(51) Int. Cl.: H04B 1/10

(54) **Interference detector**
Schaltung zur Detektion von Interferenz
Circuit de détection de l'interférence

(30) Priority: 07.02.1990 JP 2617890; 07.02.1990 JP 2617990
(43) Date of publication of application: 03.05.1995
(62) Divisional of application: 90123570.5
(73) Proprietor: KOKUSAI DENSHIN DENWA KABUSHIKI KAISHA, Shinjuku-ku Tokyo-to (JP)
(72) Inventor: Satoh, Gunkichi, Yokohama-shi (JP); Kimura, Toshinari, Kawaguchi-Shi (JP); Inoue, Takashi, Nara-Shi (JP)
(74) Representative: Liesegang, Roland, Dr.-Ing.

(56) References cited:
- US-A- 4 395 779
- US-A- 4 549 312
- NEW ELECTRONICS, vol. 16, no. 7, April 1983 LONDON, page 19 CALVERD 'Tracking hum filter'

## Description

### BACKGROUND OF THE INVENTION

The present invention relates to interference detector for an interference reducing device which detects and reduces unmodulated carriers, narrow-band FM carriers, or their sweep carriers which get mixed as interference carriers into the communication band in a TDMA (Time Division Multiple Access) digital satellite communication system.

With the development of satellite communication systems, the number of earth stations which access the same satellite is on the increase. Occasionally the situation arises where non-modulated carriers, narrow-band FM carriers, or their sweep carriers are emitted as unwanted carriers owing to a fault or operation mistake of earth station equipment. In the TDMA system each station transmits, every fixed period of time called a TDMA frame, a burst-like TDMA signal of a fixed carrier frequency within a certain time slot allotted to the station. To establish burst synchronization for high precision control of the burst transmission timing of respective stations to ensure that they send their bursts at different timing, a reference station sends a reference burst for each TDMA frame. The reference burst is used for system control as well as for maintaining the synchronization of the TDMA system. On the other hand, a traffic station for transmitting and receiving information sends a traffic burst. The application of the above-mentioned unwanted carriers as interference carriers to the TDMA system not only degrades the signal quality but also may sometimes hinder the system control by the reference burst and synchronization of the traffic burst, making communication impossible throughout the system.

In the time division multiple access system (the TDMA system) introduced in the digital satellite communication, each station transmits a burst-like TDMA signal of a fixed carrier frequency within a certain time slot allotted to the station. To establish burst synchronization for high precision control of the burst transmission timing of respective stations so that they send their bursts at different timing, a synchronization burst is inserted for each TDMA frame. The synchronization burst (a reference burst) sent from a reference station is employed for system control as well as for maintaining the synchronization of the TDMA system. An interference carrier, if mixed in such a communication system, will degrade the signal quality and, further, may sometimes destroy the burst synchronization and the system control by the reference burst, leading to a failure in communication.

For detecting an interference carrier mixed in the input signal band, there has been proposed a method which obtains the interference carrier frequency from the output frequency of a voltage-controlled oscillator which is synchronized with the narrow-band interference carrier by means of a phase lock loop, or a method in which the input signal band is divided by a filter multiplexer composed of a plurality of narrow band-pass filters of different center frequencies and a signal component in each divided band is detected, converted into a digital value and processed by a CPU for estimating the interference wave carrier frequency. The interference detector employing the phase lock loop is simple in circuit construction and permits easy detection and tracking of a unmodulated carrier or interference carrier which continuously sweeps in the received signal band, but in the case where the interference carrier mixed in the input signal is discontinuous or intermittent, synchronization of the phase lock loop cannot be maintained. Further, when the level of the interference carrier becomes low, the synchronized state of the phase lock loop becomes unstable, making it difficult to decide the presence or absence of the interference carrier. On the other hand, the filter multiplexer system is capable of detecting an interference carrier; even if it is discontinuous or intermittent, but in a case of detecting an interference carrier of power lower than that of the input signal, it is necessary to use a filter multiplexer of enhanced detecting sensitivity by dividing a desired transmission band with a number of narrow-band filters, a number of A/D converters for converting the detected outputs of the multiplexer into digital values and a CPU of high-speed operation. This inevitably makes the interference detector bulky and expensive.

From the US-A 4,549,312 a radio receiver with automatic interference and distortion compensation is known, in which undesired, interfering narrow band received signals in a Loran-C receiver are automatically rejected at the edges of the Loran-C band, and the resulting distortion of the received Loran beacon signals caused by this rejection is automatically compensated for.

In this case, two variable reject filters are provided at the low end of the band for rejecting in the range 75 to 90 KHz, and two filters are provided in the upper end of the band in the range 110 to 125 KHz. Also, two search and sample narrow band pass filters are provided, one for searching the low end and one for searching the high end.

The frequency range 75 to 90 KHz below the Loran-C band and the frequency range 110 to 125 KHz above the band are searched for interfering signals and the search filters are both stepped in the same direction from the highest to the lowest frequency in the range in four steps.

An interference reducing device can be based on the fact that the modulated carrier for use in the digital satellite communication system and the narrow-band interference carrier are, in general, markedly different from each other in power density, quickly detects the narrow-band interference carrier which suddenly gets mixed into the input signal band and, eliminates that one portion of the signal frequency band in which the interference carrier exists, through use of a band-elimination filter, thereby preventing degradation of the line quality in the TDMA system owing to the interference carrier and precluding the possibility of system down.

An object of the present invention is to provide an interference detector of a multiplexer sweep system which obviates the above-mentioned defects of the prior art by combining the functions of the phase lock loop and the filter multiplexer and permits the estimation of the frequency of an interference carrier with a relatively simple structure. This object is met by the features disclosed in Claim 1.

For rapid and accurate detection of the interference carrier frequency mixed in the input signal band, it is possible to employ a system which derives the interference carrier frequency from the output frequency of a voltage controlled oscillator (VCO) synchronized with the narrow-band interference carrier by means of a phase-lock loop, or a system which divides the input signal band by a filter multiplexer composed of a number of narrow band-pass filters of different center frequencies and estimates the interference carrier frequency by detecting a signal component in each divided band. The interference carrier frequency mixed in the input signal band is thus detected and a certain band in which the interference carrier exists is reduced by a band-elimination filter. In the TDMA system, however, since each station needs to perform, at high speed, a carrier regeneration and a bit timing regeneration for the demodulation of the received burst, the bursts which are transmitted from the reference station and the traffic stations are each headed by carrier and bit timing recovery sequence. These bit sequences are often composed of an unmodulated carrier and a periodic repetition pattern for high-speed synchronization, and their frequency spectra concentrate at a particular frequency. For example, in an INTELSAT TDMA system which utilizes a 120 Mbps four-phase phase-shift keying modulation (QPSK), the carrier and bit timing recovery sequence are each composed of an unmodulated wave and a repetition pattern of 0/π, and hence the frequency spectrum during the sending of the bit string centers on the center frequency f0 of the signal band and a frequency f0±30MHz. Thus, if the spectra in particular frequency ranges by the bit sequence are rejected by the band-elimination filter, then the carrier recovery and the bit timing recovery cannot be achieved, and consequently, no normal demodulation is feasible. On the other hand, since randomly modulated frequency spectra are partly rejected outside these frequency ranges, the influence of removal of signal components by the band-elimination filter is slight. The amount of the narrow-band interference carrier reduced by the band-elimination filter in the TDMA system differs with the configurations of the bit sequence for carrier and bit timing recovery.

When an interference carrier is reduced by processing a signal of an input frequency to a demodulator such as a PSK signal appended with bit sequence for carrier recovery and bit timing recovery for use in the TDMA system, for example, a signal of the intermediate frequency (IF) band of a 140 MHz center frequency, the attenuation of a band-elimination filter is limited to a value smaller than a certain one, or for the frequency bands in which spectra are produced by the bit sequence, the IF signal is combined with the band-elimination filter output via a narrow band-pass filter to control the attenuation in each of these frequency bands to a value smaller than a certain one, thereby preventing the signal quality of the TDMA signal from being degraded by the insertion of the band-elimination filter. When no interference wave is detected, the input IF signal is passed intact through the interference reducing device so that no deterioration of the signal quality will be introduced by the reducing device.

To facilitate this, the interference detector of the present invention has such a construction as follows:

The interference detector comprises: a frequency converter employing a voltage-controlled oscillator as a local oscillator; a multiplexer employing a plurality of narrow band-pass filters of center frequencies set within the output frequency band of the frequency converter; a circuit for detecting and converting the output of the multiplexer into a digital voltage value; a CPU for processing the converted digital voltage value; a D/A converter for controlling the oscillation frequency of the voltage-controlled oscillator with the CPU output; and means responsive to a control signal from the CPU to sweep the oscillation frequency of the voltage-controlled oscillator, to apply a desired frequency-converted input signal band component to the multiplexer and to detect and convert its output into a digital voltage value for input into the CPU.

Based on the fact that a digital modulated signal and a narrow-band interference carrier mixed therein sharply differ from each other in power density, the interference detector of the present invention decides the presence or absence of the interference carrier, its frequency and the direction of its change by processing in the CPU and follows up the interference carrier frequency to obtain an oscillation frequency of the voltage-controlled oscillator which is equal to the interference carrier frequency.

The detecting speed is in proportion to the pass bandwidth of the multiplexer using a plurality of band-pass filters, but the tracking accuracy is in reverse proportion to the above-said pass bandwidth. By using a multiplexer of a large pass bandwidth to increase the detecting speed of the interference detector and by using a multiplexer of a relatively small bandwidth to enhance the tracking accuracy of an interference tracking circuit, it is possible to drive the voltage-controlled oscillator at a frequency following the interference carrier frequency.

### BRIEF DESCRIPTION OF THE DRAWINGS

The present invention will be described in detail below with reference to the accompanying drawings, in which:
Fig. 1 is a block diagram illustrating an interference reducing device incorporating the interference detector of the present invention;
Figs. 2 and 3 are block diagram illustrating specific operative examples of an interference detector for use in the device depicted in Fig. 1;
Figs. 4 and 6 are block diagrams illustrating embodiments of the interference detector of the present invention for the interference reducing device;
Fig. 5 is a graph explanatory of the operation of this invention device.

### DETAILED DESCRIPTION

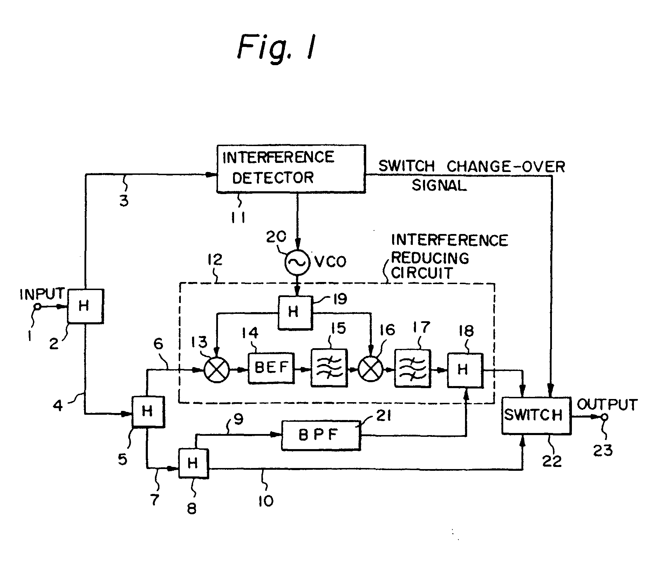

With reference to Fig. 1, an interference reducing device will first be described. An IF signal applied to an input terminal 1 is branched by hybrid circuits (H) 2 and 5 and provided on first, second, third and fourth lines 3, 4, 6 and 7. The IF signal on the first line 3 is applied to an interference detector 11 for detecting the presence or absence of an interference carrier and its frequency. The IF signal on the third line 6 is applied to an interference reducing circuit 12, in which, when an interference wave is detected, the signal frequency band where its frequency exists is reduced by a band-elimination filter (BEF) 14. The fourth line 7 is further branched by a hybrid circuit 8 into fifth and sixth lines 9 and 10. The output of the fifth line 9 is applied to a hybrid circuit 18 via a plurality of narrow band-pass filters 21 each of which uses, as its center frequency, a particular frequency at which spectra are produced by the afore-mentioned bit sequence in the IF band. In the hybrid circuit 18 the output of the fifth line 9 is combined with the output of the third line 6 provided with the BEF 14. The sixth line 10 is a bypass transmission line of the IF signal in the normal state where no interference is present, and this bypass is connected via a switch 22 to an output terminal 23.

The interference reducing circuit 12 comprises a first mixer (MIX) 13, the narrow BEF 14 for interference wave reduction use, a second mixer 16, a hybrid circuit 19 for branching the output of a local oscillator (VCO) 20 for application to the first and second mixers 13, 16, and band-pass filters (BPF) 15 and 17 which reduce an image frequency component resulting from a frequency conversion and pass therethrough only desired signal band components. In the interference wave reducing circuit 12 the IF signal and the output of the voltage controlled oscillator (VCO) 20 used as a local oscillator are provided to the mixer 13 to obtain a signal component of their sum (or difference) frequency, which is applied via the BEF 14 and the BPF 15 to the MIX 16 for conversion into a frequency of the difference (or sum) between it and the output frequency of the VCO 20, i.e. an IF signal. If the center frequency of the BEF 14 is selected within the output frequency band of the MIX 13, then the section between the input of the MIX 13 and the output of the MIX 16 can be used as a frequency variable narrow band-elimination filter by changing the oscillation frequency of the VCO 20.

When an interference carrier gets mixed into the IF signal applied to the input terminal 1 of this device, it is detected by the interference detector 11, which obtains its center frequency and then yields a VCO control signal and a switch change-over signal. The VCO control signal controls the oscillation frequency of the VCO 20 so that the band-elimination frequency of the interference reducing circuit 12 coincides with the frequency of the interference carrier. Accordingly, the IF signal provided on the third line 6 is reduced by the BEF 14 of the interference reducing circuit 12 in the frequency band in which the signal component is included and the interference carrier is present. To permit demodulation of the TDMA signal even in a case where the particular frequency band in which spectra are produced by the bit sequence appended to the burst signal is reduced by the band-elimination filter, it is necessary to limit the attenuation of the filter. However, this lessens the interference reducing effect. To heighten the interference reducing effect by removing the above-mentioned particular frequency band, the plurality of narrow BPFs 21, each using as its center frequency the particular frequency dependent on the configuration of the bit sequence, are connected to the fifth line 9, the outputs of the BPFs 21 are combined with the output of the interference reducing circuit 12 by the hybrid circuit 18, and the attenuation of each BPF 21 is adjusted. The attenuation of these frequency bands can thus be controlled. Incidentally, the interference detector 11 changes over the switch 22 in accordance with the detection or nondetection of the interference and connects the interference band reducing output or the output of the sixth line 10 as the bypass transmission line to the output terminal 23.

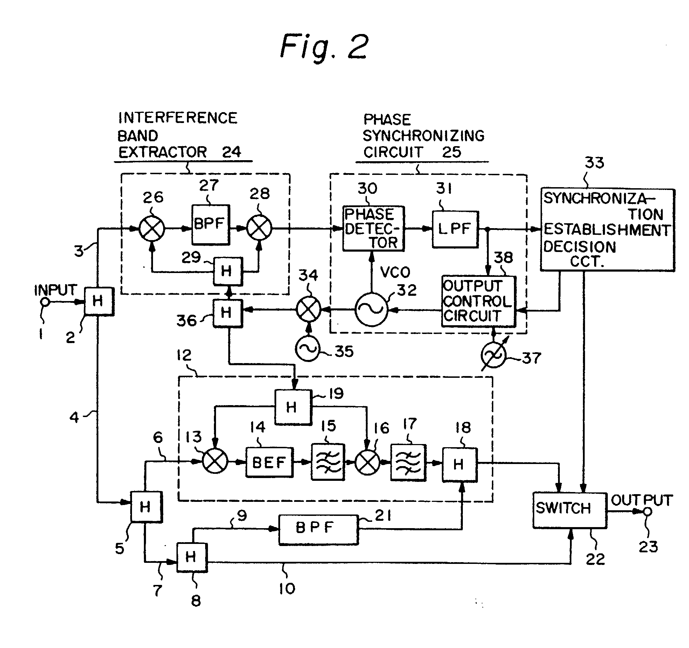

Fig. 2 illustrates a first embodiment of the interference detector according to the present invention that employs a phase lock loop.

The interference detector in this embodiment is divided into an interference band extractor 24 which is composed of a third MIX 26, a fourth MIX 28, a BPF 27 interposed between them and a hybrid circuit 29 for branching a local oscillation signal, and a phase synchronizing circuit (phase-lock loop) 25. The interference band extractor 24 has the same construction as the interference reducing circuit 12 in the first embodiment and functions as a frequency variable type BPF by varying the frequency of a local oscillator. The pass-band width of the BPF 27 in the interference band extractor 24 is set to about 10% of a desired signal band width so as to facilitate the interference pull-in operation of the phase-lock loop 25 which raises the interference carrier power vs. signal power ratio when an interference carrier gets mixed. The local oscillation signal to the third and fourth MIXs 26 and 28 is the output of a VCO 32 of the phase-lock loop 25 which is applied thereto via hybrid circuits 36 and 29 after being frequency converted by a local oscillator 35 and a MIX 34.

The phase synchronizing circuit (phase-lock loop) 25 is basically formed by a phase detector 30, a low-pass filter (LPF) 31 and the VCO 32. In the normal state in which no interference is present, that is, when no phase synchronization is established, the oscillation frequency of the VCO 32 is controlled by the output voltage of a sweep oscillator 37 and sweeps in the transmission band of a desired signal. The output of the VCO 32 is used also as the local oscillation signal source of the interference band extractor 24. While no interference wave is detected, the transmission band of the desired signal is swept by the interference band extractor 24 and the output having extracted a portion of the signal band is applied to the phase-lock loop 25 to hunt for the interference.

On the other hand, when the phase-lock loop 25 is synchronized with the interference carrier, a synchronization establishment decision circuit 33 provides a control signal to an output control circuit 38 of the sweep oscillator 37, controlling the VCO 32 by the output voltage of the LPF 31 alone. Accordingly, the phase-lock loop 25 forms an ordinary phase locked loop which receives an interference carrier as its input signal and provides the output frequency of the VCO 32 synchronized with the interference carrier. The synchronization establishment decision circuit 33 decides whether or not the phase-lock loop 25 is synchronized with the interference carrier, and determines the detection or non-detection of the interference carrier. Upon detection of the interference carrier, the synchronization establishment decision circuit 33 changes over the switch 22, through which the output of the interference reducing circuit 12 is applied to the output terminal 23. As is the case with the interference band extractor 24, the local oscillation frequency of the interference reducing circuit 12 is provided by frequency converting the oscillation frequency of the VCO 32 with the local oscillator 35 and the MIX 34 and then branching the converted output with a hybrid circuit 36.

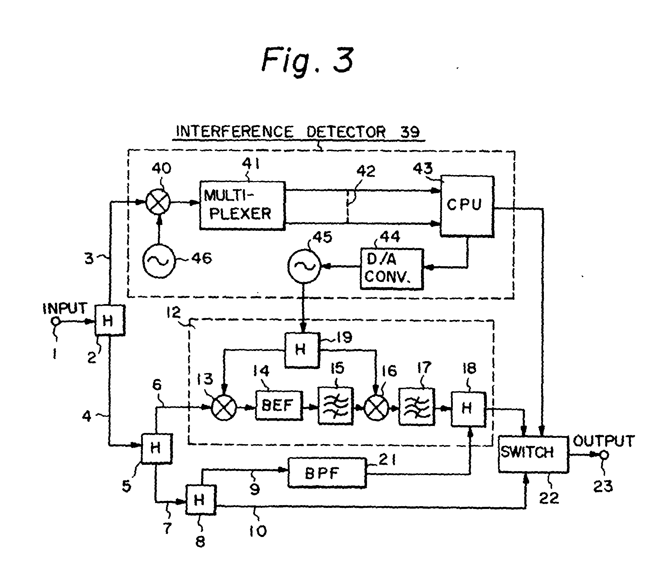

Fig. 3 illustrates a second embodiment of the present invention. In this embodiment the interference detector employs a multiplexer composed of a plurality of narrow-band BPFs of different center frequencies and has a circuit arrangement in which the outputs of bands divided by the multiplexer are detected and converted into digital voltage values, which are processed by a CPU so as to detect an interference carrier and determine its frequency.

The IF signal applied to the input terminal 1 is applied via the hybrid circuit 2 to an interference detector 39. The IF signal fed to the interference detector 39 is converted by a local oscillator 46 and a MIX 40 into a signal of the operating frequency band of a multiplexer 41, thereafter being applied thereto for division into individual bands. The output terminal of each of a plurality of narrow band-pass BPFs forming the multiplexer 41 is connected to a detector and an A/D converter, and a digital voltage value A/D converted from an analog detected voltage of each band is stored into a memory of a CPU 43. The CPU 43 determines the presence or absence of an interference carrier in each band by digital processing following a predetermined algorithm based on a detected voltage value in the absence of an interference carrier. While in Fig. 3 only one CPU is shown to be used, it is also possible to perform parallel processing for respective bands through use of a plurality of CPUs for high-speed operation. In a case where it is determined by such digital processing that an interference carrier is present in a certain frequency band, information about the center frequency of the interference carrier is sent via D/A converter 44 from the CPU 43 to a VCO 45, from which a continuous wave corresponding to the center frequency of the interference carrier is provided to the interference reducing circuit 12. In the interference reducing circuit 12 the BEF 14 reduces the frequency band in which there exists the interference carrier containing the signal component of the IF signal applied to the interference reducing circuit 12 via the input terminal 12 and the hybrid circuit 2 and 5. Further, the CPU 43 applies a switch change-over signal to the switch 22, providing therethrough the output of the interference reducing circuit 12 to the output terminal 23. Where it is determined that no interference carrier exists, the CPU 43 controls the switch 22 so that the IF signal transmitted over the bypass transmission line 10 is provided intact to the output terminal 23.

With the above-described operation, when it is determined that an interference carrier is present in the IF input signal, a signal with the interference band reduced is output, whereas when it is determined that no interference carrier exists, the IF input signal is output intact. According to the present invention, it is possible to implement an interference reducing device which is characterized in that the attenuation of a band-elimination filter for reducing an interference carrier is limited to a value smaller than a certain one, or for frequency bands in which spectra are produced by bit sequence for burst signal demodulating use, the IF signal is combined with the band-elimination filter output via a narrow band-pass filter to limit the attenuation in these frequency bands to a value smaller than a certain one, thereby preventing the TDMA signal quality from being degraded by the insertion of the band-elimination filter in a particular frequency band. Incidentally, when no interference is detected, the IF input signal is passed intact through the interference reducing device; so that no deterioration of the signal quality is caused by the interference reducing device.

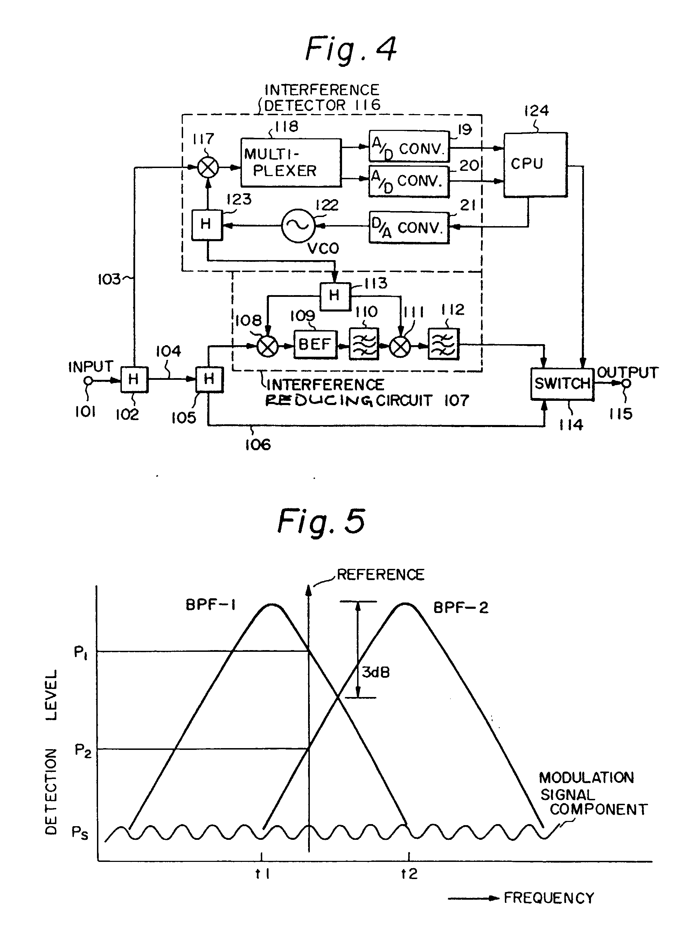

Fig. 4 illustrates a third embodiment of an interference detector of the present invention. An IF signal applied to an input terminal 101 is branched by a hybrid circuit 102 and provided to first and second lines 103 and 104. The IF signal on the first line 103 is applied to an interference detector 116, wherein it is used for detecting the presence or absence of an interference carrier and its frequency. The IF signal on the second line is branched by a hybrid circuit 105 into two, one of which is applied to an interference reducing circuit 107 and the other of which is applied to an IF line 106. Upon detection of an interference, the signal frequency band in which the interference carrier frequency exists is reduced by a band elimination filter (BEF) 109. The IF line 106 is a bypass transmission line for a normal IF signal containing no interference and is connected via a switch 114 to an output terminal 115.

The interference reducing circuit 107 is made up of a first mixer (MIX) 108, a band-elimination filter (BEF) 109 for reducing a narrow-band interference carrier, a second mixer 111, a hybrid circuit 13 for branching a local oscillator signal for input into the first and second mixers, and band-pass filters (BPF) 110 and 112 each of which eliminates an image frequency components resulting from frequency conversion and permits the passage therethrough of only a desired signal band component. The interference reducing circuit 107 functions as a frequency-variable narrow-band elimination filter by changing the frequency of a voltage-controlled oscillator (VCO) 122 which is used as a local oscillator for each of the first and second mixers. An interference carrier mixed in the IF signal provided to the input terminal 101 is detected by the interference detector 116, and a VCO control signal and a switch change-over signal are yielded in search for the center frequency of the detected interference. Consequently, the IF signal provided to the interference reducing circuit 107 is reduced by the band-elimination filter 109 in the frequency band in which the interference exists. Upon detection of the interference reducing circuit 107 changes over the switch 115 and provided therethrough at the output terminal 115 the IF signal having removed therefrom the interference band.

The interference detector 116 in this embodiment comprises a third mixer 117, a multiplexer 118 employing two narrow-band filters of different center frequencies, A/D converters 119 and 120 for detecting the outputs of respective bands divided by the multiplexer 118 and converting them into digital voltage values, a CPU 124 for processing the digital values, a D/A converter 121 for controlling the oscillation frequency of the VCO 122 with the CPU output, the VCO 122, and a hybrid circuit 123 for branching the VCO output.

The IF signal applied to the interference detector 116 is converted by the VCO 122 and the mixer 117 into the operating frequency band of the multiplexer 118 and is then applied to the multiplexer 118, wherein its band is divided into plural parts. Each of the two narrow-band filters forming the multiplexer 118 is connected at its output terminal to a detector and the A/D converter, and a digital version of the analog detected voltage of each divided band is loaded into a memory of the CPU 124. The CPU 124 sweeps the VCO 122 and performs digital processing following an algorithm determined on the basis of a voltage value detected in the absence of an interference in the desired signal band, thereby deciding the presence or absence of an interference wave in each band being swept. Where it is determined by such digital processing that an interference is present in a certain frequency band, the sweep of the VCO 122 is stopped and the output levels of the multiplexer 118 are compared with one another in terms of magnitude to tracking the interference.

Next, a detailed description will be given of the detection tracking operation of the interference detector employing the multiplexer 118 formed by two narrow band-pass filters.

Fig. 5 shows frequency vs. detected level relationships obtained when a signal component containing an interference was detected by a multiplexer having an arrangement in which narrow-band filters BPF-1 and BPF-2 of center frequencies f1 and f2 were disposed so that they would cross each other at a point of a 3 dB passage loss. By selecting the pass bandwidths of filters BPF-1 and BPF-2 sufficiently small as compared with the signal band, the difference between a detected level PS of a signal component of varying power density and a detected level P1 or P2 in the presence of an interference increases, making it possible to detect the interference with high sensitivity. Thus, by sweeping the VCO and comparing the detected level of the multiplexer 118 in the band of the signal frequency-converted by the mixer 117 with the detected level obtained in the absence of the interference, or by setting a threshold value at a point higher than the detected level of the signal component, it is possible to decide the presence or absence of the interference and estimate its frequency from the sweep frequency of the VCO. Further, as regards the tracking of the interference carrier frequency when it varies, the direction of its change can be decided by comparing the detected levels of the filters BPF-1 and BPF-2 with each other in terms of magnitude. The accuracy of estimation of the interference carrier frequency could be increased by forming the multiplexer with more than two band-pass filters.

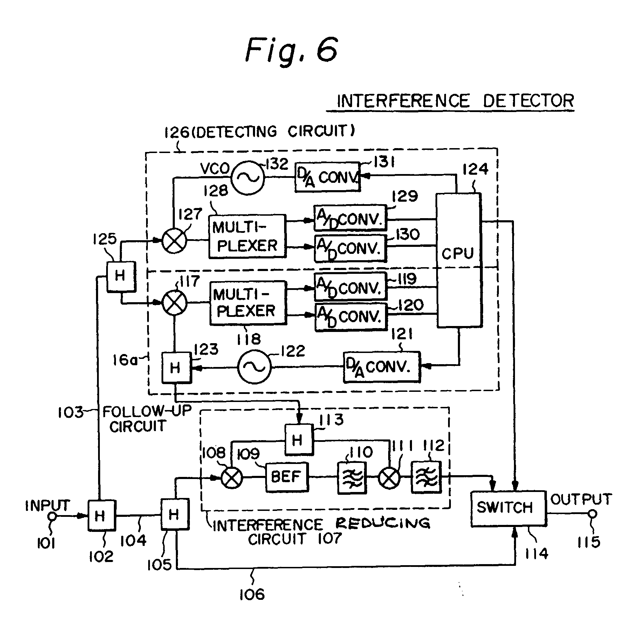

Fig. 6 illustrates a fourth embodiment of the present invention. In a case of detecting and tracking an interference carrier by sweeping the filter multiplexer 118 of the interference detector 116 in the first embodiment of the invention, the interference wave detecting sensitivity is high when the pass bandwidth of the multiplexer is small, but in this instance, the speed for sweeping the signal band is limited. On the other hand, an increase in the pass bandwidth of the multiplexer 118 will raise the sweep speed but will lower the accuracy of estimation of the interference carrier frequency as well as the detecting sensitivity. This embodiment is adapted to solve these shortcomings by forming the interference detector with circuits which possess the detecting function and the tracking function, respectively. In this embodiment the input signal line to the interference detector is branched into 7th and 8th lines, both of which are connected circuits which are of the same construction as that of the interference detector 116 used in the first embodiment and are operated as a tracking circuit 116a and a detecting circuit 126, respectively. Multiplexers used in the tracking circuit 116a connected to the 7th line and the detecting circuit 126 connected to the 8th line have different pass bandwidths. The multiplexer employing a band-pass filter of a large bandwidth is used to detect the interference wave which the multiplexer employing a band-pass filter of a small band-width is used to tracking the interference carrier, thereby speeding up the detection of the interference and permitting highly accurate tracking of its carrier frequency.

Now, a description will be given, with reference to Fig. 6, of the construction and operation of the fourth embodiment of the invention.

The detecting circuit in this embodiment comprises a mixer 127, a multiplexer 128 employing a plurality of narrow band-pass filters, A/D converters 129 and 130 for detecting the outputs of bands divided by the multiplexer 128 and converting them into digital voltage values, a CPU 124 for processing these digital values, a D/A converter 131 for controlling the oscillation frequency of a VCO 132 with the output of the CPU 124, and the VCO 132.

The IF signal applied to the input signal terminal 101 is branched by the hybrid circuits 102 and 105, from which the branched parts are applied to the interference eliminating circuit 107, the IF line 106 and the interference detector is branched by a hybrid circuit 125, from which the branched parts are provided to the interference detecting circuit 126 and the follow-up circuit 116a. The IF signal fed to the detecting circuit 126 is converted into the operating frequency band of the multiplexer 128 by means of the VCO 132 and the mixer 127, thereafter being applied to the multiplexer 128.

A digital voltage value converted from an analog voltage value which is the detected output of the multiplexer 128 is loaded into a memory of the CPU 124. The CPU 124 sweeps the VCO 132 and performs digital processing following an algorithm determined on the basis of a voltage value detected in the absence of an interference carrier in the desired signal band, thereby deciding the presence or absence of an interference carrier in each band being swept. In a case where it is determined by such digital processing that an interference carrier is present in a certain frequency band, the sweep of the VCO 132 is stopped and the output levels of the multiplexer 128 are compared with each other in terms of magnitude to obtain the center frequency of the interference carrier so that the oscillation frequency of the VCO 132 of the tracking circuit 116a is controlled via the CPU 124 accordingly. The tracking circuit 116a is identical in construction with the interference detector 116 in the embodiment shown in Fig. 4, and the frequency of the VCO 122 is set by control of the CPU 124 based on information of the detecting circuit 124. In a case where the interference carrier frequency is varying, the output of the VCO 122 which follows up the varying frequency is output to the interference eliminating circuit 107. Moreover, the CPU 124 sends a switch change-over signal to the switch 114, through which the IF signal applied to the interference eliminating circuit 107 is provided to the output terminal 115. When it is determined that no interference is present, the CPU 124 allows the IF signal on the IF line 106 to be provided intact to the output terminal 115.

It is also possible to omit the D/A converter 131 and the VCO 132 in the detecting circuit 126 by branching the output of the VCO 122 of the tracking circuit 116a for input into the mixer 127 and by modifying the control sequence of the CPU 124 which accompanies the interference detecting and tracking operations.

As described above in detail, it is possible with the interference detector of the present invention to quickly detect a narrow-band interference carrier which suddenly gets mixed into a satellite circuit and to obtain an output frequency of a voltage-controlled oscillator which follows up the interference wave with high accuracy.

## Claims

1. An interference detector for an interference reducing device, comprising:
input means (103) for receiving a digitally modulated signal;
a voltage-controlled oscillator (122) for generating an oscillation frequency output;
a mixer (117) for mixing the digital modulated signal with said oscillation frequency output;
a multiplexer (118) for dividing the output of said mixer into a plurality of signal frequency band parts;
A/D converters (19, 20) for converting said divided signals into digital voltage outputs;
a CPU (124) for detecting a narrow band interference carrier included in said received digitally modulated signal by the use of said converted voltage outputs; and
a D/A converter (21) for converting the output of said CPU to an analog output to control said oscillation frequency output of said voltage-controlled oscillator with the CPU output.

2. An interference detector for a narrow-band interference eliminating circuit (107) in which a narrow-band filter (109) and a band-pass filter (112) which permits the passage therethrough of only desired frequency-converted signal band components are connected between first (108) and second mixers (111), and the output of a voltage-controlled oscillator (122), whose oscillation frequency is controlled by the output of an interference detecting circuit for detecting a narrow-band interference carrier mixed in a digital modulated signal input thereto as an input signal, is provided as the local oscillator input of each of said first (108) and second mixers (111) to thereby control the center frequency of the elimination band of said narrow-band filter (112), said interference detector comprising:
a third mixer (117); a multiplexer (118) employing a plurality of narrow band-pass filters; a circuit for detecting and converting the output of said multiplexer into a digital voltage value (119,120); a CPU (124) for processing the detected digital voltage value; a D/A converter (121) for controlling the oscillation frequency of said voltage-controlled oscillator (122) with the output of said CPU (124); and means whereby said input signal is frequency-converted by applying it to said third mixer (117), employing said voltage-controlled oscillator (122) as its local oscillator and the output of said multiplexer (118) having its center frequency set in said frequency-converted desired signal band is detected and converted into a digital voltage value for input into said CPU (124);
wherein the oscillation frequency of said voltage-controlled oscillator (122) is swept by a control signal from said CPU (124), digital voltage values of plural outputs of said multiplexer swept in a desired signal band are processed by said CPU (124), whereby the presence or absence of said interference carrier, its frequency and the direction of its change are decided to permit said interference carrier to be followed.

3. An interference detector according to claim 2, which further comprises a second line branched from a first input signal line, siad second line having a circuit made up of a fourth mixer (127) a second voltage-controlled oscillator (132), a second multiplexer employing a plurality of narrow band-pass filters of pass bandwidths larger than that of said narrow band-pass filter connected to said first line, a circuit for detecting and converting (129, 130) the output of said second multiplexer (128) into a digital voltage value, a CPU for processing the detected digital voltage value, and a D/A converter (131) for controlling the oscillation frequency of said second voltage-controlled oscillator (132) with the output of said CPU;
wherein the oscillation frequency of said second voltage-controlled oscillator (132) is swept by a control signal from said second-mentioned CPU, the digital voltage value of the output of said second multiplexer (128) swept in a desired signal band is processed by said second CPU to decide the presence or absence of said interference carrier and its frequency, the oscillation frequency of the voltage-controlled oscillator (122) of said first line is controlled by said CPU (124) and digital voltage values of plural outputs of the multiplexer (118) of said first line are processed by said CPU (124) to decide the direction of change of the interference carrier frequency and follow it up, whereby said interference carrier can be quickly detected and the output frequency of said voltage-controlled oscillator (122) of said first line following the interference carrier frequency with high accuracy can be output.

4. An interference detector according to claim 3, wherein the voltage-controlled oscillator (122) of said first line is used as a local oscillator of said fourth mixer (132) connected to said second line, the oscillation frequency of said voltage-controlled oscillator (122) is swept with a control signal from said CPU (124), the digital voltage value of the output of said second multiplexer (128) swept in a desired signal band is processed by said processor (124) to decide the presence or absence of the interference carrier and its frequency, and after the detection of the interference carrier, the digital voltage value of the output of said multiplexer (118) connected to said first line is processed by said CPU to decide the direction of change of the interference carrier frequency to be followed, whereby the interference can be quickly detected and the output frequency of said voltage-controlled oscillator (122) connected to said first line following the interference carrier frequency with high accuracy can be output.

## Patentansprüche

1. Interferenzdetektor für eine Einrichtung zum Verringern der Interferenz, mit folgenden Merkmalen:
eine Eingabevorrichtung (103) zum Empfangen eines digitalen modulierten Signals; ein spannungsgesteuerter Oszillator (122) zum Erzeugen eines Schwingungsfrequenz-Ausgangssignals;
eine Mischerstufe (117) zum Mischen des digital modulierten Signals mit dem Schwingungsfrequenz-Ausgangssignal;
ein Multiplexer (118) zum Aufteilen des Ausgangssignals des Mischers in mehrere Signalfrequenzbandabschnitte;
Analog-Digital-Wandler (19, 20) zum Umwandeln der aufgeteilten Signale in digitale Ausgangsspannungen;
eine CPU (124) zum Erfassen eines schmallbandigen Interferenzträgers, der in dem empfangenen, digital modulierten Signal enthalten ist, unter Verwendung der gewandelten Ausgangsspannungen; und
ein Digital-Analog-Wandler (21) zum Umwandeln des Ausgangssignals der CPU in ein analoges Ausgangssignal, um das Schwingungsfrequenz-Ausgangssignal des spannungsgesteuerten Oszillators mit dem Ausgangssignal der CPU zu steuern.

2. Interferenzdetektor für eine Schaltung (107) zum Eliminieren einer Schmalband-Interferenz, in der ein Schmalbandfilter (109) und ein Bandpaßfilter (112), das nur den Durchgang gewünschter, frequenzgewandelter Signalbandkomponenten erlaubt, zwischen einer ersten Mischerstufe (108) und einer zweiten Mischerstufe (111) angeschlossen sind, wobei das Ausgangssignal eines spannungsgesteuerten Oszillators (122) als das lokale Oszillatoreingangssignal der ersten Mischerstufe (108) und der zweiten Mischerstufe (111) vorgesehen wird, wobei die Schwingungsfrequenz des Oszillators durch das Ausgangssignal einer Interferenzerfassungsschaltung zum Erfassen eines schmalbandigen Interferenzträgers gesteuert wird, der mit einem digital modulierten Signal kombiniert ist, welches als ein Eingangssignal in diese eingegeben wird, um dadurch die Mittenfrequenz des Unterdrückungsbandes des Schmalbandfilters (109) zu steuern, mit folgenden Merkmalen des Interferenzdetektors:
eine dritte Mischerstufe (117);
ein Multiplexer (118), der mehrere schmalbandige Durchlaßfilter verwendet; eine Schaltung zum Erfassen und Konvertieren des Ausgangssignals des Multiplexers in einen digitalen Spannungswert (119, 120);
eine CPU (124) zum Verarbeiten des erfaßten digitalen Spannungswertes;
ein Digital-Analog-Wandler (121) zum Steuern der Schwingungsfrequenz des spannungsgesteuerten Oszillators (122) mit dem Ausgangssignal der CPU (124); und
eine Vorrichtung, mit der das Eingangssignal frequenzgewandelt wird, indem es an die dritte Mischerstufe (117) angelegt wird, welche den spannungsgesteuerten Oszillator (122) als ihren lokalen Oszillator verwendet, wobei das Ausgangssignal des Multiplexers (118), dessen Mittenfrequenz in dem gewünschten, frequenzgewandelten Signalband eingestellt ist, erfaßt und in einen digitalen Spannungswert umgewandelt wird, um es in die CPU (124) einzugeben;
wobei die Schwingungsfrequenz des spannungsgesteuerten Oszillators (122) von einem Steuersignal von der CPU (124) gewobbelt wird, und digitale Spannungswerte mehrerer Ausgänge des Multiplexers, die in einem gewünschten Signalband gewobbelt werden, von der CPU (124) verarbeitet werden, wobei das Vorhandensein oder Fehlen des Interferenzträgers, seine Frequenz und die Richtung seiner Änderung erfaßt werden, um dem Interferenzträger folgen zu können.

3. Interferenzdetektor nach Anspruch 2, mit einer zweiten Leitung, die von einer ersten Eingangssignalleitung abzweigt, wobei die zweite Leitung eine Schaltung umfaßt, die folgende Komponenten aufweist:
eine vierte Mischerstufe (127), ein zweiter spannungsgesteuerter Oszillator (132), ein zweiter Mulitplexer, der mehrere schmalbandige Durchlaßfilter mit Durchlaßbandbreiten verwendet, die größer sind als die des mit der ersten Leitung verbundenen schmalbandigen Durchlaßfilters, eine Schaltung zum Erfassen und Umwandeln (129, 130) des Ausgangssignals des zweiten Multiplexers (128) in einen digitalen Spannungswert, eine CPU zum Verarbeiten des erfaßten digitalen Spannungswertes und ein Digital-Analog-Wandler (131) zum Steuern der Schwingungsfrequenz des zweiten spannungsgesteuerten Oszillators (132) mit dem Ausgangssignal der CPU;
wobei die Schwingungsfrequenz des zweiten spannungsgesteuerten Oszillators (132) durch ein Steuersignal der an zweiter Stelle genannten CPU gewobbelt wird, der digitale Spannungswert des Ausgangs des zweiten Multiplexers (128), der in einem gewünschten Signalband gewobbelt wird, von der zweiten CPU verarbeitet wird, um das Vorhandensein oder Fehlen des Interferenzträgers und seine Frequenz zu bestimmen, die Schwingungsfrequenz des spannungsgesteuerten Oszillator (122) der ersten Leitung durch die CPU (124) gesteuert wird und digitale Ausgangswerte der mehreren Ausgänge des Multiplexers (118) der ersten Leitung von der CPU (124) verarbeitet werden, um die Richtung der Änderung der Interferenzträgerfrequenz zu bestimmen und ihr zu folgen, wobei der Interferenzträger schnell erfaßt werden kann und die Ausgangsfrequenz des spannungsgesteuerten Oszillators (122) der ersten Leitung, die der Interferenzträgerfrequenz mit hoher Genauigkeit folgt, ausgegeben werden kann

4. Interferenzdetektor nach Anspruch 3, bei dem der spannungsgesteuerte Oszillator (122) der ersten Leitung als ein lokaler Oszillator der vierten Mischerstufe (132) verwendet wird, die mit der zweiten Leitung verbunden ist, wobei die Schwingungsfrequenz des spannungsgesteuerten Oszillators (122) mit einem Steuersignal von der CPU (124) gewobbelt wird, der digitale Spannungswert des Ausgangs des zweiten Multiplexers (128), der in einem gewünschten Signalband gewobbelt wird, von dem Prozessor (124) verarbeitet wird, um das Vorhandensein oder Fehlen des Interferenzträgers und seine Frequenz zu bestimmen, und nach der Erfassung des Interferenzträgers der digitale Spannungswert des Ausgangs des Multiplexers (118), der mit der ersten Leitung verbunden ist, von der CPU verarbeitet wird, um die Richtung der Änderung der Interferenzträgerfrequenz, der gefolgt werden soll zu bestimmen, wobei die Interferenz schnell erfaßt werden kann und die Ausgangsfrequenz des spannungsgesteuerten Oszillators (122), der mit der ersten Leitung verbunden ist, ausgegeben werden kann, wobei die Ausgangsfrequenz der Interferenzträgerfrequenz mit hoher Genauigkeit folgt.

## Revendications

1. Détecteur d'interférence pour dispositif de réduction d'interférence, comprenant :
un moyen d'entrée (103) pour recevoir un signal modulé numériquement ;
un oscillateur à commande en tension (122) pour produire une sortie de fréquence d'oscillation ;
un mélangeur (117) pour mélanger le signal numérique modulé à la sortie de fréquence d'oscillation ;
un multiplexeur (118) pour diviser la sortie de mélangeur en une pluralité de portions de bande de fréquence de signal ;
des convertisseurs analogique/numérique (19, 20) pour convertir les signaux divisés en sorties de tension numérique ;
une unité centrale (124) pour détecter une porteuse d'interférence à bande étroite incluse dans le signal reçu modulé numériquement en utilisant les sorties de tension converties ; et
un convertisseur numérique-analogique (21) pour convertir la sortie de l'unité centrale en une sortie analogique pour commander la sortie de fréquence d'oscillation de l'oscillateur à commande en tension par la sortie de l'unité centrale.

2. Détecteur d'interférence pour circuit d'élimination d'interférence à bande étroite (107) dans lequel un filtre à bande étroite (109) et un filtre passe-bande (112) qui permet de laisser passer seulement les composantes de bande de signal souhaité converties en fréquence sont connectés entre des premier (108) et second (111) mélangeurs, et dans lequel la sortie d'un oscillateur à commande en tension (122), dont la fréquence d'oscillation est commandée par la sortie du circuit de détection d'interférence, pour détecter une porteuse d'interférence à bande étroite mélangée à une entrée de signal modulé numériquement en tant que signal d'entrée, est fournie en tant qu'entrée d'oscillateur local de chacun des premier (108) et second (111) mélangeurs pour commander ainsi la fréquence centrale de la bande d'élimination du filtre à bande étroite (112), le détecteur d'interférence comprenant :
un troisième mélangeur (117) ; un multiplexeur (118) utilisant plusieurs filtres passe-bande à bande étroite ; un circuit pour détecter et convertir la sortie du multiplexeur en une valeur de tension numérique (119, 120) ; une unité centrale (124) pour traiter la valeur de tension numérique détectée ; un convertisseur numérique-analogique (21) pour commander la fréquence d'oscillation de l'oscillateur à commande en tension (122) par la sortie de l'unité centrale (124) ; et un moyen par lequel le signal d'entrée est converti en fréquence en l'appliquant au troisième mélangeur (117) utilisant l'oscillateur à commande en tension (122) comme son oscillateur local et par lequel la sortie du multiplexeur (118) ayant sa fréquence centrale fixée dans la bande de signal désirée convertie en fréquence est détectée et convertie en une valeur de tension numérique pour introduction dans l'unité centrale (124) ;
dans lequel la fréquence d'oscillation de l'oscillateur à commande en tension (122) est balayée par un signal de commande à partir de l'unité centrale (124), les valeurs de tensions numériques des diverses sorties du multiplexeur balayées dans une bande de signal désirée sont traitées par l'unité centrale (124), d'où il résulte que la présence ou l'absence de la porteuse d'interférence, sa fréquence et sa direction de changement sont décidées pour permettre à la porteuse d'interférence d'être suivie.

3. Détecteur d'interférence selon la revendication 2, comprenant en outre une seconde ligne dérivée à partir d'une première ligne de signal d'entrée, la seconde ligne comprenant un circuit constitué d'un quatrième mélangeur (127), d'un second oscillateur à commande en tension (132), d'un second multiplexeur utilisant plusieurs filtres passe-bande à bande étroite de largeur de bande passante supérieure à celle du filtre passe-bande à bande étroite connecté à la première ligne, un circuit pour détecter et convertir (129, 130) la sortie du second multiplexeur (128) en une valeur de tension numérique, une unité centrale pour traiter la valeur de tension numérique détectée, et un convertisseur numérique-analogique (131) pour commander la fréquence d'oscillation du second oscillateur à commande en tension (132) par la sortie de l'unité centrale ;
dans lequel la fréquence d'oscillation du second oscillateur à commande en tension (132) est balayée par un signal de commande en provenance de la seconde unité centrale mentionnée, la valeur de tension numérique de la sortie du second multiplexeur (128) balayée dans une bande de signal désirée est traitée par la seconde unité centrale pour décider de la présence ou de l'absence de la porteuse d'interférence et de sa fréquence, la fréquence d'oscillation de l'oscillateur à commande en tension (122) de la première ligne est commandée par l'unité centrale (124) et les valeurs de tension numérique des diverses sorties du multiplexeur (118) de la première ligne sont traitées par l'unité centrale (124) pour décider de la direction de changement de la fréquence porteuse d'interférence et pour la suivre, d'où il résulte que la porteuse d'interférence peut être rapidement détectée et que la fréquence de sortie de l'oscillateur à commande en tension (122) de la première ligne suivant la fréquence porteuse d'interférence avec une grande précision peut être fournie.

4. Détecteur d'interférence selon la revendication 3, dans lequel l'oscillateur à commande en tension (122) de la première ligne est utilisé comme oscillateur local du quatrième mélangeur (132) connecté à la seconde ligne, la fréquence d'oscillation de l'oscillateur à commande en tension (122) est balayée par un signal de commande en provenance de l'unité centrale (124), la valeur de tension numérique de la sortie du second multiplexeur (125) balayée dans une bande de signal désirée est traitée par le processeur (124) pour décider de la présence ou de l'absence de la porteuse d'interférence à cette fréquence, et après détection de la porteuse d'interférence, la valeur de tension numérique de la sortie du multiplexeur (118) connectée à la première ligne est traitée par l'unité centrale pour décider de la direction de changement de la fréquence porteuse d'interférence à suivre, d'où il résulte que l'interférence peut être rapidement détectée et que la fréquence de sortie de l'oscillateur à commande en tension (122) connectée à la première ligne suivant la fréquence porteuse d'interférence avec une grande précision peut être fournie.
